# EUROPEAN PATENT APPLICATION

(11) **EP 2 434 801 A1**
(43) Date of publication of application: **28.03.2012**
(21) Application number: 09844934.1
(22) Date of filing: 22.05.2009
(51) Int. Cl.: H04W 28/12, H04W 16/06, H04W 88/16, H04W 92/20

(54) **WIRELESS COMMUNICATION SYSTEM, WIRELESS COMMUNICATION ACCESS POINT DEVICE, AND CONTROL NODE**

(71) Applicant: Hitachi, Ltd., Chiyoda-ku Tokyo 100-8280 (JP)
(72) Inventor: HANAOKA, Seishi, Kokubunji-shi Tokyo 185-8601 (JP)
(74) Representative: MERH-IP Matias Erny Reichl Hoffmann
(86) International application number: PCT/JP2009/059462
(87) International publication number: WO 2010/134202

(57) **Abstract**

A used frequency, a used bandwidth, and others of a wireless zone in a base station are determined so as to be "a wired band between the base station and a gateway = a upper limit value of an operating bandwidth of a wireless zone of a femtocell" by cyclically collecting to recognize a band which is available for a wired line between the base station and the gateway, a power on/off state of the wired line, or others, and a peripheral base station is notified of the information of an unused wireless frequency, so that system switching in consideration of the state of the wired line is achieved, and at the same time, excessive radiowave transmission in the wireless line is prevented to reduce interference.

## Description

### TECHNICAL FIELD

The present invention particularly relates to a technique for high-speed switching among a plurality of wireless communication systems including a wireless communication system using an in-home ADSL, FTTH, etc. for a wired line of a network side and a technique for system switching between a macrocell and a femtocell.

### BACKGROUND ART

In a conventional wireless system, as represented by a third-generation mobile phone or others, a wireless communication provider has installed a base station, a gateway, and a core network, and the wireless communication provider has also installed and operated a wired cable between the base station and the gateway.

Also, in response to the recent increase in the needs for speed-up of wireless communication and for diversification of communication applications, it has been difficult to cover a wide area by one base station and support the communication of all the users positioned in the wide area. Therefore, for example, a method of utilizing a plurality of systems by combining different wireless communication systems of WiMAX, wireless LAN, and others exist in the wide area in addition to a cellular and installation of a base station covering a smaller area in the same wireless system as represented by a femtocell have been studied.

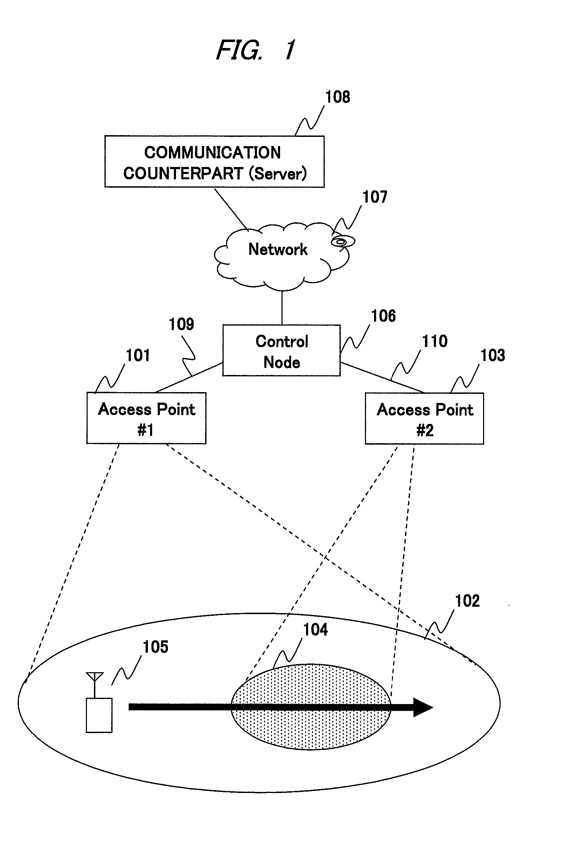

An example of a conventional system configuration representing such a circumstance is shown in FIG. 1. An access point #1 (101) covers a service area (102). Here, the wireless communication method of the access point #1 is assumed to be the cellular, the WiMAX, the wireless LAN, or others. An access point #2 (103) covers a service area (104). Here, the wireless communication method of the access point #2 is assumed to be the cellular, the WiMAX, the wireless LAN, or others as well as the access point #1.

If the wireless communication methods of the access point #1 and the access point #2 are different from each other, the system configuration shown in FIG. 1 has a system which handles a plurality of systems.

If the wireless communication methods of the access point #1 and the access point #2 are the same as each other, the system configuration shown in FIG. 1 has a system in which the base stations having a plurality of cell configurations such as a macrocell and a femtocell are mixed in the same system.

Here, FIG. 1 is a diagram in which the service area (102) of the access point #1 (101) is wider than the service area (104) of the access point #2 (103) and completely contains the service area (104). However, this diagram is only one example, the service area (104) may be a wider area than the service area (102), and the service areas of both of the access points are not necessarily completely overlapped.

In any case, when a terminal (105) moves within these areas, inter-system handover or handover between macrocell and femtocell occurs so as to enable a higher-speed (or more QoS-ensured) communication for the terminal. On a network, in order to achieve these handovers, a control node (106) is connected via both the access points and wired cables (109 and 110). In a destination of the control node, a communication counterpart or a connection-destination server (108) exists via a network (107).

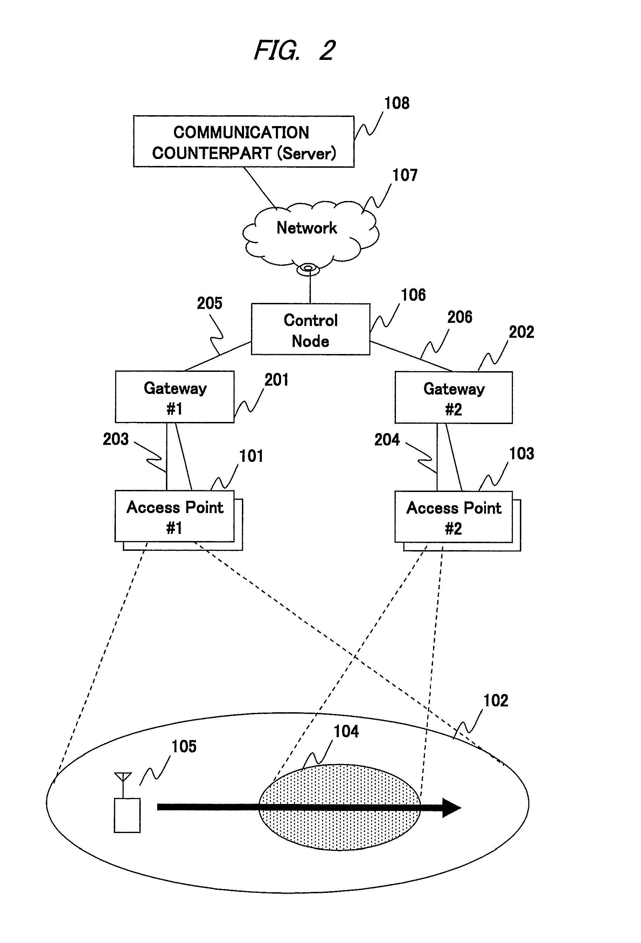

Also, if the gateway which integrates and controls the plurality of access points (base stations) exists such as the cellular, gateways (201 and 202) of respective systems are installed between the access points (101 and 103) and the control node (106) as shown in FIG. 2.

Here, the access points and the gateways are mutually connected by wired cables (203 and 204), respectively, and these wired cables have been installed and operated by the wireless communication provider as described above. Also, each band of the wired cables has been designed so as to ensure a communication at the maximum communication speed of a wireless line in accordance with the ability of the contained access point or base station or the number of base stations contained in the gateway. For example, when the cellular (EVDO) Rev.0 is taken as an example, the downlink of the wireless communication method of Rev.0 is maximally 2.4 Mb/s regardless of the number of contained users (in other words, 2.4 Mb/s are shared by a plurality of users), and therefore, the band required for the downlink for one base station (101) is 2.4 Mb/s. If the gateway (201) contains 10 base stations, the band minimally required for the downlink is 2.4 M x 10 = 24 Mb/s, and therefore, a wired cable (205) between the control node and the gateway is designed to enable communication of 24 Mb/s or higher, and a cable between the gateway and each access point is designed to enable communication of 2.4 Mb/s or higher. In this manner, the bands of wired lines are designed so that the wireless lines can be always contained from a viewpoint of the installation and operation by the wireless communication provider.

On an assumption that the wired side can always contain the wireless lines, several band controlling methods for achieving the QoS of the user have been studied.

For example, in Patent Document 1, a required band depending on a content requested by a user terminal is ensured for each of a wired line and a wireless line. A wireless terminal (1 of FIG. 1 of Patent Document 1) transmits a content transmission request (S1) to a server (7 of FIG. 1 of Patent Document 1) via a wireless base station (3 of FIG. 1 of Patent Document 1). The server selects the wired band information corresponding to the content requested by the wireless terminal from wired band information 10 retained so as to correspond to each content, and determines a wired band used when the corresponding content is transmitted from the server to the wireless base station. Also, the wireless base station generates wireless band information used when the corresponding content is transmitted from the wireless base station to the wireless terminal based on the wired band information of which the server notifies, determines a band in a wireless zone to be used when the corresponding content is transmitted from the wireless base station to the wireless terminal, and sets the wireless zone (see paragraph 0019 of Patent Document 1 or others).

On the other hand, in Patent Document 2, on a basis of a state that a cognitive base station (20 of Patent Document 2) recognizes a state of the wireless band enabling a communication with a cognitive terminal (40 of Patent Document 2), it compares with the band required for the communication, and allocates the communication band.

When the communication occurs, a cognitive gateway (10 of Patent Document 2) first transmits an allocation request of the wireless band to the cognitive base station. The cognitive base station determines the information of the band which can be allocated between the cognitive base station and the cognitive terminal based on the information of the usage state of radiowaves recognized through the communication or others with the cognitive terminal, and notifies the cognitive gateway of this information. The cognitive gateway compares the information of the allocatable band of which the cognitive base station notifies with the band required for the communication, and notifies the cognitive base station of the information of the band to be actually allocated to the wireless zone (see paragraph 0084 of Patent Document 2 or others).

### Prior Art Documents

### Patent Documents

Patent document 1: Japanese Patent Application Laid-Open Publication No. 2005-79740
Patent document 2: Japanese Patent Application Laid-Open Publication No. 2007-306206

### DISCLOSURE OF THE INVENTION

### PROBLEMS TO BE SOLVED BY THE INVENTION

In the case of Patent Document 1, for example, the wireless terminal transmits a request for reception of streaming, the server side determines to carry out the streaming at a rate of 300 kb/s, and the wireless band information is generated so as to ensure a band of 300 kb/s on the wired side between the server and the wireless base station and also ensure 300 kb/s on the wireless side between the wireless base station and the wireless terminal, so that the wireless zone is set.

In this case, when the content transmission request is provided to the server side from the wireless terminal, the wired band and the wireless band are determined in accordance with only the wired band information and the wireless band information used in the transmission of the corresponding content, and the wired band and the wireless band used in the transmission of the corresponding content are not determined in consideration of the state of the wired line between the server and the wireless base station and the state of the wireless band between the wireless base station and the wireless terminal. Also, these flows are operated for each user content, and, if a plurality of users (wireless terminals) during communication with one certain wireless base station transmit the content transmission request, it is required to control the setting of the band in the wireless zone between the wireless base station and the wireless terminals since an available band in the wireless zone between the wireless base station and the wireless terminals is limited. However, it is not described how the generation of the wireless band information is operated. As described above, in Patent Document 1, the band allocation in accordance with the available wired band and wireless band cannot be achieved.

Also, in Patent Document 2, for example, when the streaming communication at 300 kb/s or higher occurs, the cognitive gateway makes an inquiry to the cognitive base station about the state of the wireless zone. The cognitive base station recognizes the usage of radiowaves or others, and replies to the cognitive gateway that 400 kb/s can be allocated in the wireless zone. In the cognitive gateway, since the band required for the corresponding streaming communication is 300 kb/s, 300 kb/s which is the band required for the streaming communication is compared with the information of 400 kb/s which is replied as the allocatable band from the cognitive base station. As a result, the band allocation information is transmitted to the cognitive base station side so as to allocate 300 kb/s to the wireless zone.

In this case, the band required for the streaming communication is compared with the allocatable band to the wireless zone to determine the band in the wireless zone, and the state of the wired band is not a target of the comparison. As described above, in Patent Document 2, the used bands of the wired line and the wireless line cannot be allocated in accordance with the available wired band and wireless band.

In both of these Patent Documents, the wireless communication provider has installed the base station, the gateway, and the core networks, and has also installed and operated the wired cable between the base station and the gateway. Therefore, the system has been built by the wireless communication provider so as to exactly ensure the band of the wired line among the base station, the gateway, and the control node. Therefore, when the wireless band between the wireless base station and the wireless terminal is allocated, there has not been a problem that the band of the wired line among the base station, the gateway, and the control node is narrower than the wireless band between the wireless base station and the wireless terminal, and therefore, it is required to control the wireless band in consideration of the band of the wired line because of the narrowness.

However, the wired cable between the wireless base station and the gateway which has been installed and operated in the past by the wireless communication provider is expensive since it is a cable laid only for the operation. When a wireless base station is newly installed or additionally installed in order to respond to the needs in recent years for the high-speed wireless communication and the diversification of communication applications, a system configuration has been changed in order to reduce a cost such that the wireless communication provider lays the wired cable connecting between the wireless base station and the gateway so as to be replaced by a low-price narrow-band cable, or such that the wireless communication provider does not lay a dedicated line and borrows a wired network of an ADSL provider for the operation.

The state that the wireless communication provider lays the wired cable connecting between the wireless base station and the gateway so as to be replaced by the low-price narrow-band cable in order to reduce the cost corresponds to a case that the wired cable (204) connecting between the gateway and the wireless base station in FIG. 2 is a narrow-band cable.

In this case, the wireless communication system cannot ensure the communication with the wireless terminal. For example, with taking the cellular (EVDO) Rev.0 as the example, when it is assumed that the cable (204) has a narrow band and can carry out the communication at 1 Mb/s, the band required for the downlink at one base station (103) is 2.4 Mb/s, and therefore, only a volume of 1 Mb/s of 2.4 Mb/s to be originally transmitted by the wired cable can be transmitted. As a result, a problem arises that all the data does not reach the wireless terminal (105), and the communication cannot be carried out. That is, in a case that the handover from the cell 102 to the cell 104 is carried out by the wireless terminal 105, if the handover to the base station 103 is carried out in consideration of only the wireless band information in the wireless zone as a conventional technique, the band of the wired line between the gateway #2 (202) and the base station #2 (103) is narrow, and the wireless terminal 105 during the communication cannot maintain the communication in some cases. Also, in a case that the wireless communication is started when the wireless terminal 105 is located at a position of both the cell 102 and the cell 104, it is controlled either the base station #1 (101) or the base station #2 (103) is used to carry out the wireless communication in consideration of only the wireless band information of the wireless zone in a conventional technique. However, when the wired band between the gateway and the base station cannot be sufficiently ensured for the communication band requested by the wireless terminal, the wired line is a bottleneck, and the communication cannot be carried out.

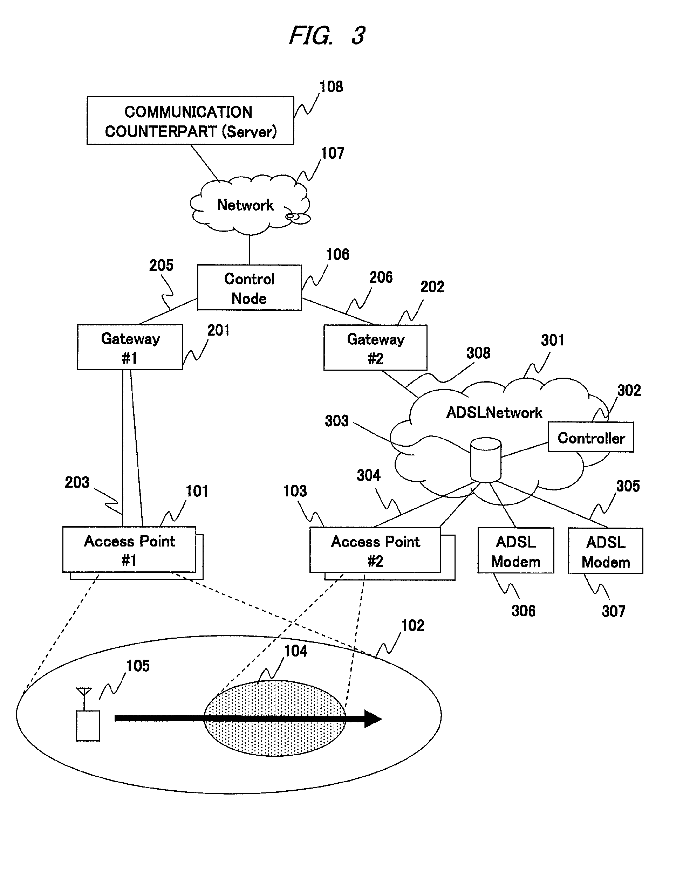

Also, the state that the wireless communication provider does not lay the wired cable connecting between the base station and the gateway by its own company in order to reduce the cost and uses the network of the ADSL provider for the connection corresponds to a system configuration shown in FIG. 3. The wireless communication provider connects to the network (301) of the ADSL provider, and uses an optical cable (303), cables (304 and 305) extending inside a house, or others, which are owned by the ADSL provider, so that the case of the connection to the base station (103) is handled.

Since the wireless communication provider lays only a cable (308) from the gateway (202) to the network of the ADSL provider, the cost can be reduced. However, the ADSL provider controls the line of the ADSL network (301) including, for example, in-house installed ADSL modems (306 and 307), by a controller (302), and therefore, the band between the base station (103) and the gateway (202) changes depending on the states of other ADSL line users. Here, the bands (304 and 305) of the wired lines are controlled by the controller (302).

In this case, the wireless communication system cannot ensure the communication with the wireless terminal. For example, when the cellular (EVDO) Rev.0 is taken as an example, the band required for the downlink at one base station (103) is 2.4Mb/s, and therefore, the band originally to be transmitted by the cable (304) is 2.4 Mb/s. Even if the cable (303) containing the base station (103) and the ADSL modems (306 and 307) in the ADSL network (301) is a wideband line of, for example, 20 Mb/s, in a case that the ADSL modems (306 and 307) are during the large-volume streaming communication or others and use 19 Mb/s thereof, only 1 Mb/s is allocated to the wired cable (304) connected to the base station, and only the volume of 1 Mb/s of 2.4 Mb/s to be originally transmitted by the cable can be transmitted. As a result, as the conventional technique, the problem arises that the communication cannot be carried out due to the inter-base-station handover based on only the information of the wireless band or due to the state that, when the base station is selected upon the communication start, all of data does not reach the wireless terminal (105).

Further, in a case that a base station covering a relatively small area such as a femtocell is provided and this base station uses the laid in-house ADSL wired line or others as the connection to the core network side, the link between the base station and the gateway is disconnected due to powering off of the base station, or the band of the wired line is temporally varied since the line (303) is shared by the other users (306 and 307) as the communication line as shown in the example of FIG. 3, as different from the line which has been installed/operated on the assumption that the line is operated by the wireless communication provider 24 hours 365 days.

As a result, even if a wireless condition is good so that a high-speed band of total 20 Mb/s combining the uplink and the downlink can be allocated to the wireless line, only total 1.5 Mb/s combining the uplink and the downlink can be ensured for the wired line between the femtocell base station and the gateway. Even if the data is transmitted by using the band which has been allocated to the wireless zone in, for example, the uplink when viewed from a user, all of the data cannot be transmitted by the wired line. As a result, there is a problem that data loss occurs and the communication cannot be correctly carried out.

Also, even if the wireless condition is good so that the high-speed band of 20 Mb/s can be allocated and the band of 20 Mb/s is actually allocated to the wireless line, if only 1.5 Mb/s can be ensured for the wired line between the femtocell base station and the gateway, a wireless band of more than required is used at the femtocell base station, there is a problem that this interferes with adjacent macrocell base station, and therefore, there is a problem that the high-speed communication cannot be carried out as a whole system.

Further, the in-house installed femto base station is not in the power-on state for 24 hours 365 days, and therefore, when a user connected to the macrocell is desired to switch to a move-destination femtocell base station, a state that the power of the femtocell base station is off so as not to be switched occurs. However, in the conventional technique, the state of the band of the wired line between the base station and the gateway cannot be recognized, and the switching to the base station whose power is off is carried out, and therefore, there is a problem that the communication is interrupted.

Accordingly, a preferred aim of the invention of the present application is to enable a wireless terminal to communicate even when a total band of a wired cable between a base station and a gateway is a narrower band than a total band of a wireless line.

Also, another preferred aim of the invention of the present application is to enable a wireless communication terminal to communicate even when a wired cable between a base station and a gateway is shared by other network of an ADSL provider or others.

Further, still another preferred aim of the invention of the present application is to reduce interference in a wireless line and achieve a high-speed communication as a whole system when a total band of a wired cable between a base station and a gateway is a narrower band than a total band of a wireless line.

Still further, still another preferred aim of the invention of the present application is to enable a communication to continue without interruption even when a power of a base station is off so that switching (handover) to that base station cannot be carried out.

### MEANS FOR SOLVING THE PROBLEMS

In a wireless communication system including: a wireless communication base station device; a gateway; and a wireless communication terminal contained in the wireless communication base station device, the gateway controls a wireless band between the wireless communication base station device and the wireless communication terminal based on a band which is available for a wired line between the wireless communication base station device and the gateway and a wireless band which is available between the wireless communication base station device and the wireless communication terminal.

### EFFECTS OF THE INVENTION

Even when the link between the base station and the gateway is disconnected due to the power off of the base station or even when the total band of the wired line is varied, the wired band and the wireless band can be allocated in accordance with variation in the wired band which is available among the control node, the gateway, and the base station and the wireless band which is available for the base station. Further, the system can be switched in accordance with variation in the wired band which is available among the control node, the gateway, and the base station and the wireless band which is available for the base station.

### BRIEF DESCRIPTIONS OF THE DRAWINGS

FIG. 1 is a conventional system configuration;
FIG. 2 is a conventional system configuration including a gateway;
FIG. 3 is a conventional system configuration to be solved by the present invention;
FIG. 4 is a system configuration according to the present invention;
FIG. 5 is a control flow according to the present invention;
FIG. 6 is a database including a wired-line band information according to the present invention;
FIG. 7 is a switching judgment flow for base-station/system according to the present invention;
FIG. 8 is a band limitation flow in a control node, according to the present invention;
FIGs . 9A to 9D are band limitation methods on a base station side, according to the present invention;
FIG. 10 is a control flow for achieving interference reduction, according to the present invention;
FIG. 11 is a system configuration including a gateway, according to the present invention;
FIG. 12 is a control flow in the system configuration including the gateway;
FIG. 13 is a control flow in a case that wireless information is collected in a gateway;
FIG. 14 is a system configuration including an ADSL line as a wired line, according to the present invention;
FIGs. 15A and 15B are database examples in the case of including the ADSL line as the wired line;
FIG. 16 is a switching control flow for a base station including a femotcell base station;
FIG. 17 is a control flow in power on (driven by a gateway);
FIG. 18 is a control flow in power on (driven by a base station);
FIG. 19 is a control flow in power off (driven by a gateway); and
FIG. 20 is a control flow in power off (driven by a base station).

### BEST MODE FOR CARRYING OUT THE INVENTION

A first embodiment according to the present invention is explained.

A system configuration in a first embodiment is the same as a conventional system configuration shown in FIG. 1. However, it has a feature in a point that a total bandwidth of wired cables (109 and 110 of FIG. 1) between access points and a control node is not as a dedicated line as the conventional system configuration, and is narrower than a bandwidth of the wireless line in some cases.

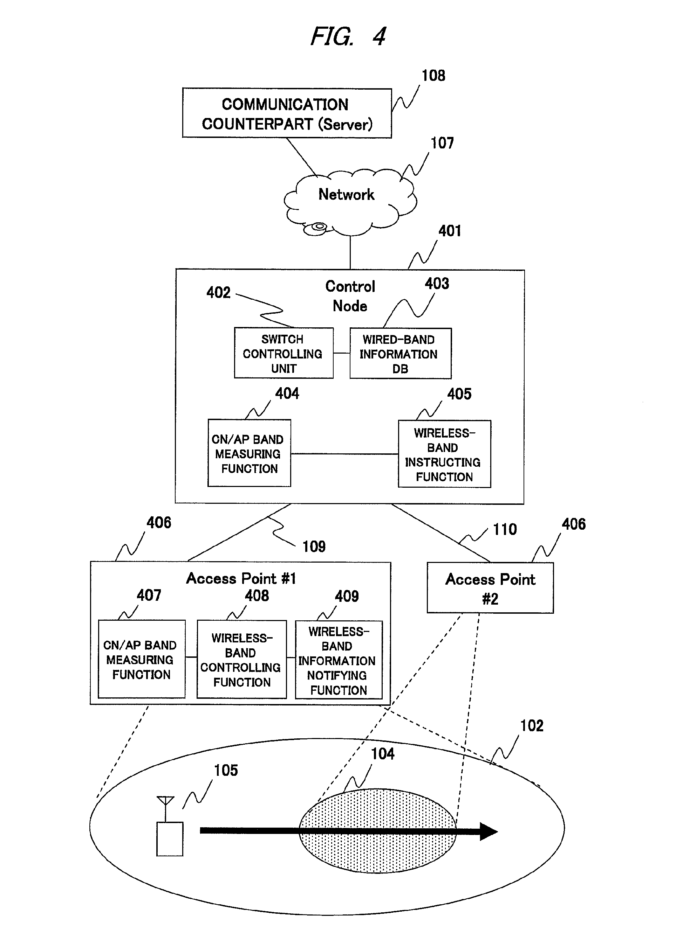

A block diagram of a control node and a base station corresponding to FIG. 1 is shown in FIG. 4.

A control node (401) includes: a switch controlling unit (402) for switching between an access point #1 (406) and an access point #2 (406); a wired-band information database (403) for retaining the information of a wired cable between the control node (401) and each base station or others as a database; a band measuring function (404) for measuring a bandwidth of a wired cable between the control node (401) and each base station; and a wireless-band instructing function (405) for instructing a bandwidth of a wireless line used by the base station (406) based on its measurement result.

Also, the base station (406) includes: a band measuring function (407) for measuring a wired bandwidth between the control node (401) and the base station in cooperation with the control node (401); a wireless-band controlling function (408) for controlling a bandwidth of a wireless line and a used band thereof in accordance with instruction from the control node; and a wireless-band information notifying function (409) for notifying a peripheral base station of the information of an unoccupied (idler) frequency band based on the band information of the wireless line set by the (408).

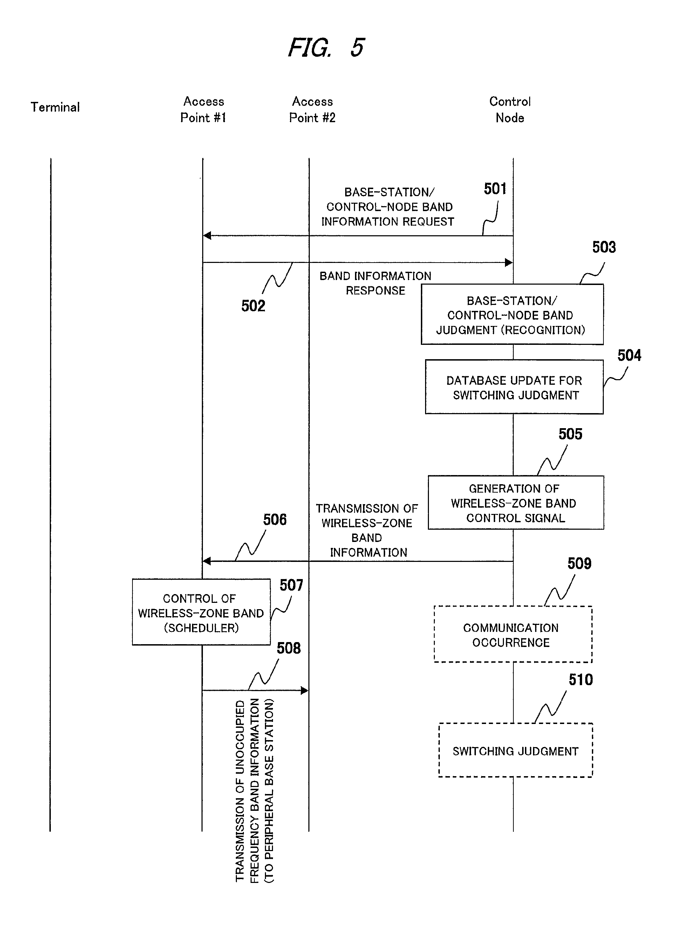

FIG. 5 shows a control flow according to the first embodiment. On a wired network side configuring a wireless communication system, a wireless communication provider has conventionally installed and operated a wired line to ensure a band sufficient for containing a wireless line. However, in the present embodiment, it is required to recognize how large bandwidth is available for the wired line.

Accordingly, first, a "base-station/control-node band information request" is transmitted (501) from the control node (401) to the base station (while the base station is sometimes called "access point" depending on the system, the base station and the access point are synonymous with each other in this explanation). The base station which has received this request responds the required information (502) in order to recognize the wired bandwidth between the base station and the control node. For example, if "ping" is transmitted as the (501) from the control node, the base station transmits a response for "ping" as the (502) to the control node. Alternatively, a message requesting the information of the bandwidth is transmitted as the (501) from the control node, and the base station may contain the information of the bandwidth of the wired line recognized in the link establishment of the wired line between the base station and the control node in the message and, transmit the message to the control node.

Based on such these responses from the base station, the control node recognizes the information of the wired bandwidth transmitted from the base station. For example, when a command response such as the "ping" is used in the (502), it recognizes the bandwidth of the wired line (503) by using a calculating formula such as "the bandwidth of the wired line"= (the number of transmitted bytes/("ping response received time" - "ping transmitted time")). Alternatively, when the information of the bandwidth of the wired line is contained in the message and is transmitted from the base station to the control node, the information of the bandwidth of the wired line is extracted from the message. Note that, if there is no response, it is judged that "the band of the corresponding wired line = 0".

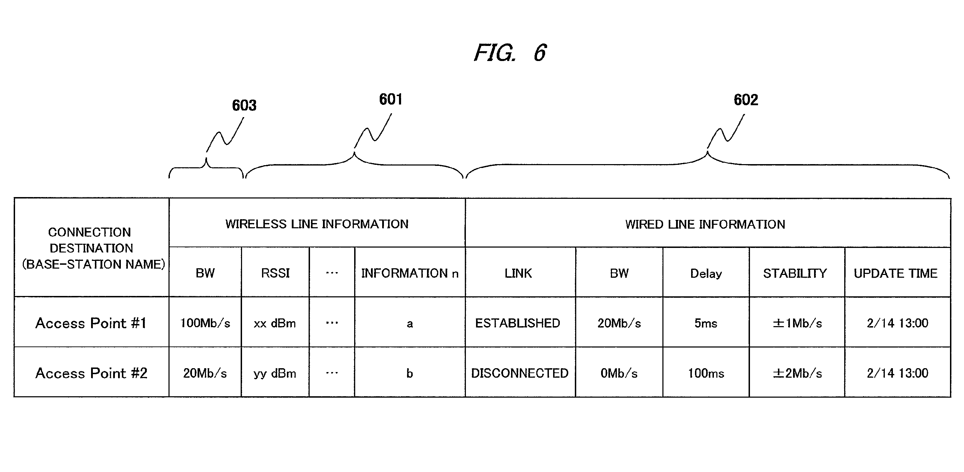

The control node having received the information updates a corresponding data (504) as a database as shown in FIG. 6 for switching judgment to either inter-base-station switching or inter-system switching.

Here, FIG. 6 is explained. Conventionally, a state (601) of the wireless line collected from each base station has been retained and updated as the database. However, in addition to this, there is a feature in a point that the information (602) of the state of the wired line between each base station and the control node (the state of the link establishment, the link disconnection, or others) or the currently available total bandwidth, the delay time, or the line stability obtained by distribution or standard deviation of each of the line total bandwidth and the line delay time is newly retained and is updated as needed. Also, there is also a feature in a point that the information (603) of the total band of the currently available wireless lines is newly retained and is updated as needed.

Here, the explanation is returned to FIG. 5 and is continued. Note that 505 to 508 will be described later.

When the communication actually occurs (509), it is judged whether the switching is carried out or not (510) based on this updated database in consideration of not only the state (601) of the wireless line but also the information (603) of the total band of the currently available wireless lines of the base station and the state (602) of the wired line. Here, the information (603) of the total band of the wireless lines may be the information of the bandwidth (for example, 10 MHz or others) set in the wireless line or the maximum band (for example, 40 Mb/s) enabling the communication as a result of the setting.

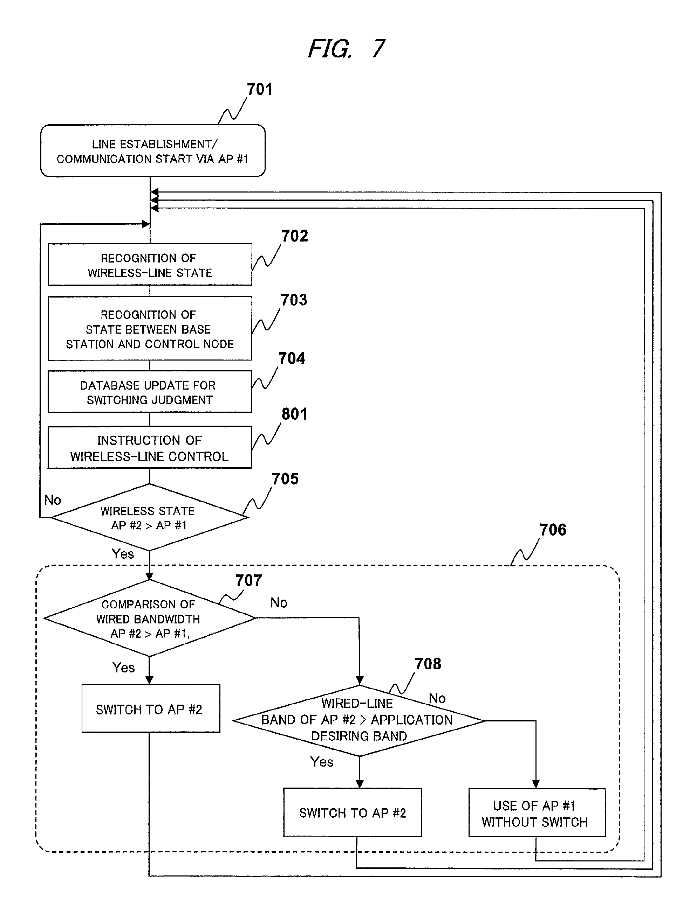

A judgment flow carried out in the switch controlling unit (402) of the control node in the inter-base-station judgement (501) is shown in FIG. 7. As an example, a situation is assumed, in which a process is started from a state (701) that the base station #1 and the wireless terminal are during communication with each other, and the wireless terminal moves toward the base station #2. Conventionally, the state (601) of the wireless line has been recognized (702) and been updated as the database. However, in the present embodiment, the information of the wired band between the base station and the control node is recognized (703), and the database is updated (704) so as to also contain the information of the wired line as shown in FIG. 6. When the wireless terminal moves toward the base station #2 so that the state of the wireless line of the base station #2 is better than that of the wireless line of the base station #1 (in the example of FIG. 6, for example, a case that an RSSI(Receive Signal Strength Indication) value of the base station #2 is larger than an RSSI value of the base station #1), the connection destination has been conventionally switched to the base station #2 (705). However, in the present embodiment, a flow shown as (706) is added to the process. That is, the connection destination is switched to the base station #2 in a case that the state of the wired line of the base station #2 is better than that of the wired line of the currently-connected base station #1 from comparison of the state of the wired line between the control node and the base station #1 with the state of the wired line between the control node and the base station #2 (707) (in the example of FIG. 6, for example, after the bandwidth (BW) of the wired line is first confirmed to be equal to or higher than the bandwidth (603) of each wireless line, in a case that the bandwidth of the base station #2 has a larger value from a comparison of the base station #1 with the base station #2 regarding the information of their bandwidths (BW), in a case that the delay time of the base station #2 has a smaller value from a comparison of the base station #1 with the base station #2 regarding the information of their delay time, or in a case that the variation width of the base station #2 has a smaller value from a comparison of the base station #1 with the base station #2 regarding the stability information calculated from the distribution, standard deviation, or others of their bandwidths (BW)). When the state of the wired line of the base station #2 is worse than that of the base station #1, the connection destination is switched to the base station #2 in a case that it (the state (603) of the wired line of the base station #2) satisfies the minimum bandwidth for carrying out application communication from a comparison whether it satisfies the minimum bandwidth or not. In a case that the state of the wired line does not satisfy the minimum bandwidth for the application communication, the connection destination is not switched thereto because good communication cannot be expected from the switching. Note that the information of the minimum bandwidth as required for the application communication is previously determined for each of applications applied to the wireless system, and the switching is judged by a comparison with this value.

Incidentally, a rest of the control flow of FIG. 5 is explained. At the stage when the control node recognizes the state (602) of the wired band between the base station and the control node, the communication of the band equal to or higher than the wired band which is available between the base station and the control node cannot be used in the wireless zone between the terminal and the base station, and therefore, the control node generates a control signal (505) for limiting the band of the wireless zone.

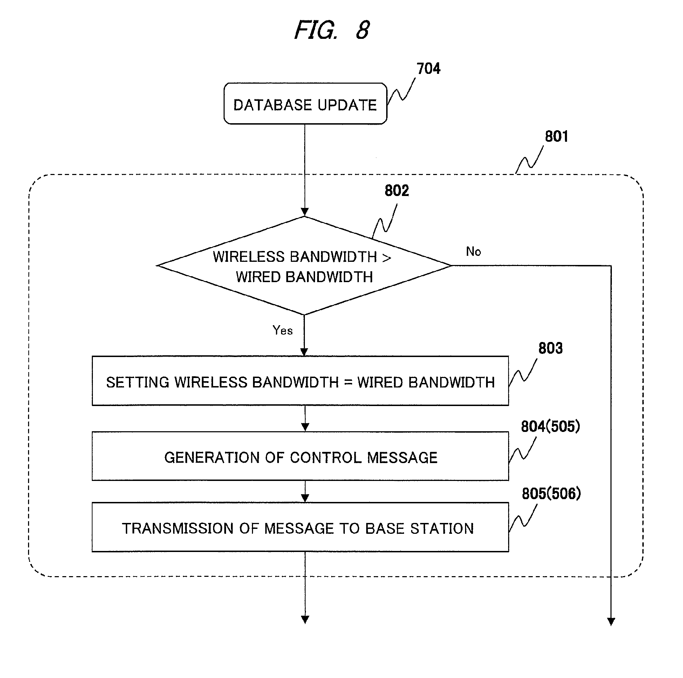

A detail of a control flow carried out in the wireless-band instructing function (405) of the control node (401) in this case is shown in FIG. 8. For example, in a case that a base station enabling the communication at maximally 20 Mb/s in a wireless line between a plurality of contained wireless terminals and the base station is connected to the control node to provide 1.5 Mb/s as a measurement result of the band of the wired line between the base station and the control node, first, their information is recognized by the database update in the (704) of FIG. 7. Next, since the wired line is a bottleneck no matter how good the state of the wireless line is and it is difficult to carry out the communication at 1.5 Mb/s or higher, the band width ("BW" of 602) of the wired line and the band width (603) of the wireless line are compared with each other (802), and the total band used as the wireless line is limited to be 1.5 Mb/s as the same as the bandwidth of the wired line (803). Next, in order to set the total bandwidth of the wireless line to be 1.5 Mb/s, the information of 1.5 Mb/s is transmitted (506) as the message from the wireless-band instructing function (405) of the control node to the base station.

Here, the process is returned to the flow of FIG. 5, and is explained. At the wireless-band controlling function (408 of FIG. 4) in the base station, the base station which has received this message sets a frequency band (507) used in spatiotemporal scheduling which is carried out in the base station in consideration of the information of 1.5 Mb/s. In this spatiotemporal scheduling, for example, as continued from the previous example, in the case of the base station enabling the communication at 20 Mb/s in all wireless frequency bands, only a frequency band enabling the communication at 1.5 Mb/s is operated, and a frequency band used for the rest corresponding to 18.5 Mb/s is not used.

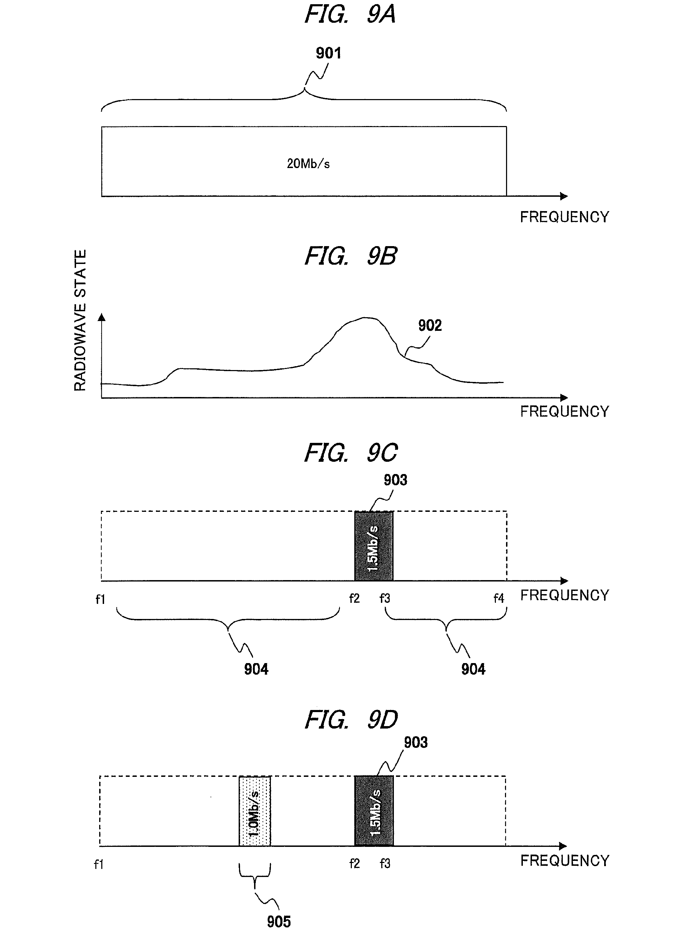

This state is shown in FIGs. 9A to 9D. FIG. 9A shows the wireless frequency band which can be set for the wireless zone, and a bandwidth (901) enabling the communication at 20 Mb/s is set for the wireless zone in the example of FIG. 9. Conventionally, all the bandwidth of (901) has been used, and a communication data has been allocated to the frequency band in accordance with a radiowave state (902) (it is called spatiotemporal scheduling since the allocation is carried out temporally and in frequency (spatially)). In the present embodiment, the communication at 1.5 Mb/s is allocated (903) for a zone having a good radiowave state as shown in FIG. 9C based on the wireless-line band control information (804 and 505) from the control node, that is, the available wireless bandwidth which is instructed based on the band of the wired line which is available between the control node and the base station, so that the radiowave transmission at the rest of the frequency bands (904) is stopped. In this manner, unnecessary radiowaves (904) are not transmitted to the periphery of the base station, and therefore, the interference to another base station caused when another base station uses the same wireless frequency band as that of FIG. 9A can be reduced. Further, by stopping the radiowave transmission at the rest of the frequency band (904), power consumption of the device can be reduced.

Also, the peripheral base station is notified (508) of the information of the frequency band corresponding to unused 18.5 Mb/s (information of the (904) in FIG. 9C). It may be notified of the information (904) of the frequency band as the information of the unoccupied frequency band itself. However, the notification of the used band (903) of all the band (901) is substitutable. In this manner, in the case that the peripheral base station (FIG. 9D) carry out the spatiotemporal scheduling, when the band of the wireless line is limited to 1.0 Mb/s in accordance with the state of the wired line this time, a frequency band of 1.0 Mb/s is set (905) as avoiding the frequency band of the (903) since the information of FIG. 9C has been obtained.

By the control described above, it can be controlled not to use the same frequency band at the adjacent base stations, and therefore, the scheduling can be achieved so as to avoid the interference between the adjacent base stations, so that, in the communication with terminals, the average throughput is improved or the communication with good communication efficiency can be achieved so that the probability of satisfying the QoS is increased.

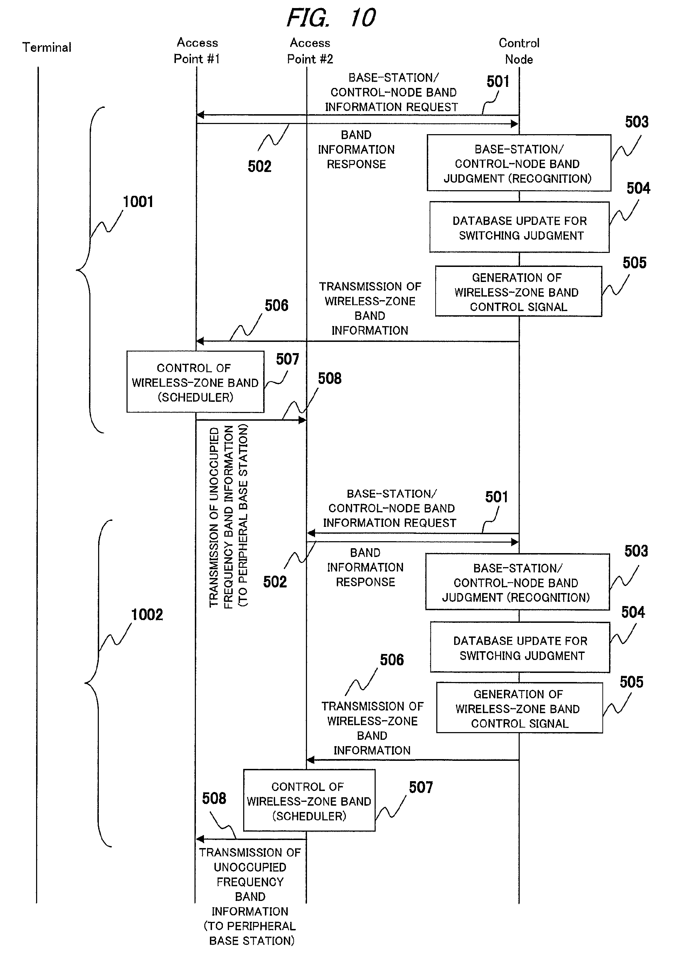

These states are described in more detail with reference to FIG. 10. As described above in the present embodiment, each of the base stations cyclically recognizes the information of the wired band and carries out the control (1001 and 1002) so that "the band of the wired line = an upper limit of the operating wireless band". A cycle for recognizing the wired band is longer than variation of the wireless band. However, in the case of the user's in-house installed base station, since it is required to detect the state that the power of the base station is turned on and off, it is considered that the cycle is in the order of seconds to minutes. As a matter of course, other cycle than that may be no problem.

Meanwhile, in the base station #2, a wireless frequency to be used in the wireless zone of the base station #2 is determined (507) based on the information (508) of the unoccupied frequency band having transmitted by the base station #1 and the information (506) of limiting the band of the wireless line in accordance with the state of the wired line between the base station #2 and the control node as following the control method shown in FIG. 9. Further, as a result, the information of the surplus frequency band is transmitted (508) to another base station. In FIG. 10, the base stations are described as two stations. However, also in a case that three or more base stations are installed, the similar control flow is used.

A second embodiment according to the present invention is explained.

A system configuration according to the second embodiment is the same as the conventional system configuration shown in FIG. 2. However, it has a feature in a point that the total bandwidth of the wired cables (205 and 206 of FIG. 2) between the access points and the gateways is not the dedicated lines as those of the conventional system configuration, and is narrower than the bandwidth of the wireless line in some cases.

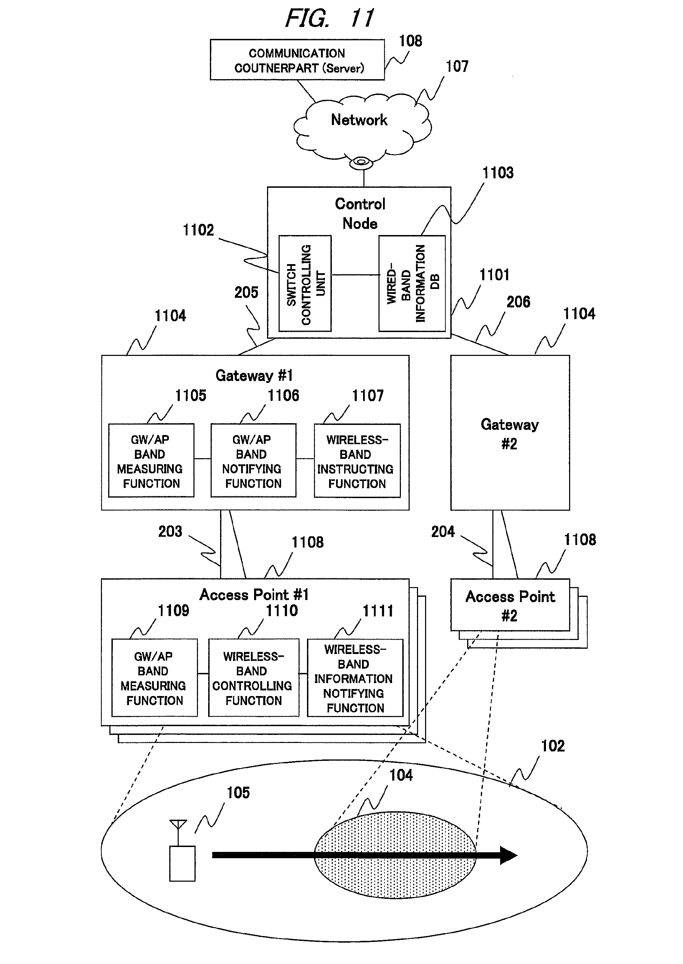

A block diagram of a control node 1103, base stations 1108, and gateways 1104 according to the present embodiment is shown in FIG. 11. When FIG. 11 is compared with the first embodiment, FIG. 11 has a different point that the gateway 1104 of each communication system is included in the system configuration between each base station and the control node.

As shown in FIG. 11, the control node (1101) includes: a switch controlling unit (1102) for switching the plurality of systems; and a wired-band information database (1103) to be a judgment factor for the switching. Here, in a data retained by the wired-band information database (1103), the wired line information (602) of FIG. 6 corresponds to that of the wired line between the gateway and the base station, and the handled data is not particularly different from the data described in the database of FIG. 6 in the first embodiment. However, information of a system type may be one of the judgement factors for the system switching by adding the information of the system type to the wireless line information (603) For example, in a case that the cellular and the wireless LAN are the system types, a judging method such that, "if the communication is enabled by the cellular, the communication is carried out by the cellular" can be found out.

The gateway (1104) includes: a band measuring function (1105) for measuring the band of the wired line between the base station and the gateway, which corresponds to the CN/AP band measuring function 404 provided in the control node in the first embodiment; a band notifying function (1106) for notifying the control node of the measured information of the wired line; and a wireless-band instructing function (1107) for transmitting an instruction for controlling the bandwidth of the wireless line based on the measured information of the wired line, which is a function corresponding to the wireless-band instructing function 405 provided in the control node in the first embodiment. The band measuring function (1105) and the wireless-band instructing function (1107) are the same as the (404) and the (405) of FIG. 4 in their functions described in the first embodiment, respectively, and therefore, are not explained here.

The base station (1108) includes: a band measuring function (1109) for measuring the band of the wired line between the gateway and the base station in cooperation with the gateway; a wireless-band controlling function (1110) for controlling the band of the wireless line in accordance with the instruction from the gateway; and a wireless-band information notifying function (1111) for notifying the peripheral base station of the information of the unoccupied frequency band based on the information of the band of the wireless line set by the (1110). Here, the band measuring function (1109), the wireless-band controlling function (1110), and the wireless-band information notifying function (1111) are the same as the (407), the (408), and the (409) of FIG. 4 in their functions described in the first embodiment, and therefore, are not explained here.

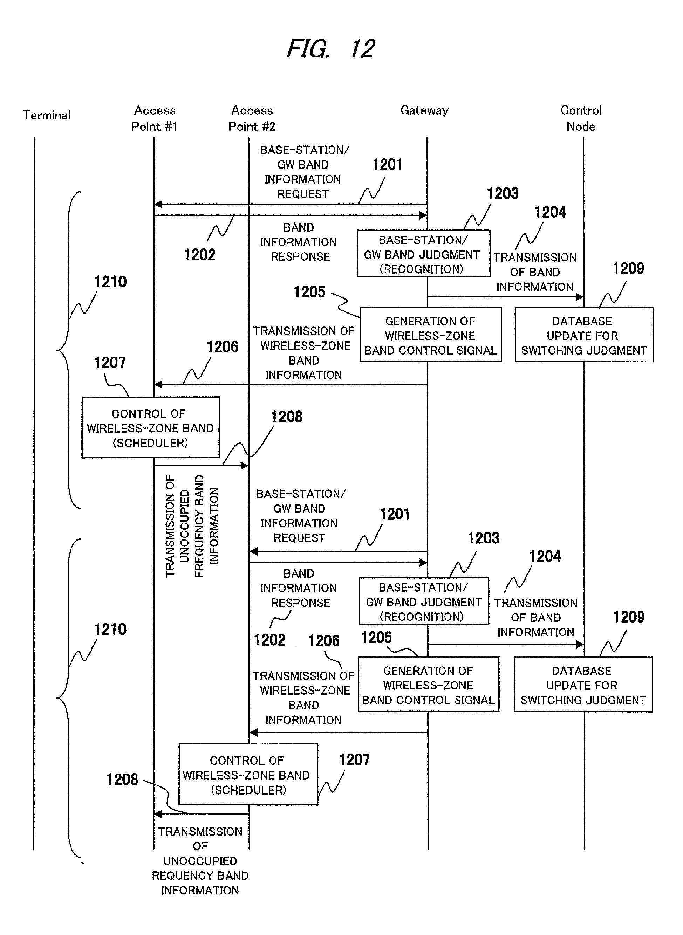

A control flow according to the second embodiment is shown in FIG. 12.

On the wired network side configuring the wireless communication system, conventionally, the wireless communication provider has installed and operated the wired line to ensure the band sufficient for containing the wireless line. However, in the present embodiment, it is required to recognize how large bandwidth is available for the wired line.

Accordingly, first, the GW/AP band measuring function 1105 of the gateway transmits (1201) a "base-station/gateway band information request" from the gateway to the base station. The GW/AP band measuring function 1109 of the base station which has received this request responds (1202) the required information for recognizing the wired bandwidth between the base station and the gateway. A specific example for achieving the (1201) and the (1202) have been already described in the first embodiment and is not different from that in the present embodiment, either, and therefore, is not explained here.

Based on the response (1202) from the base station, the gateway recognizes the information of the wired bandwidth having transmitted from the base station. The method of recognizing the information of the wired bandwidth has been already described in the first embodiment and is not different from this also in the present embodiment, and therefore, is not explained here.

The GW/AP band notifying function 1106 of the gateway having recognized the band information of the wired line between the base station and the gateway notifies (1204) the control node of this information. The control node receives this information, and updates (1209) the corresponding data as the database 1103 as shown in FIG. 6 for the judgment switching carried out when the switch controlling unit 1102 switches as the inter-base-station switching or the inter-system switching. There is a feature in a point that the information having notified from the gateway is newly retained and is updated as needed, the information being the state, the total bandwidth, the delay time, and the line stability of the wired line between each base station and the gateway.

The judgment flows in the case that the communication actually occurs and in the case of the switching judgment are the same as those of the first embodiment, and therefore, are not explained here.

At a stage when the gateway recognizes the state of the wired band between the base station and the gateway, the communication at the wired band which is available between the base station and the gateway or at higher cannot be used in the wireless zone between the terminal and the base station, and therefore, the gateway generates (1205) a control signal for limiting the band of the wireless zone, and transmits (1206) it to the base station. The content of the process at the base station is the same as that described in the first embodiment, and therefore, is omitted here.

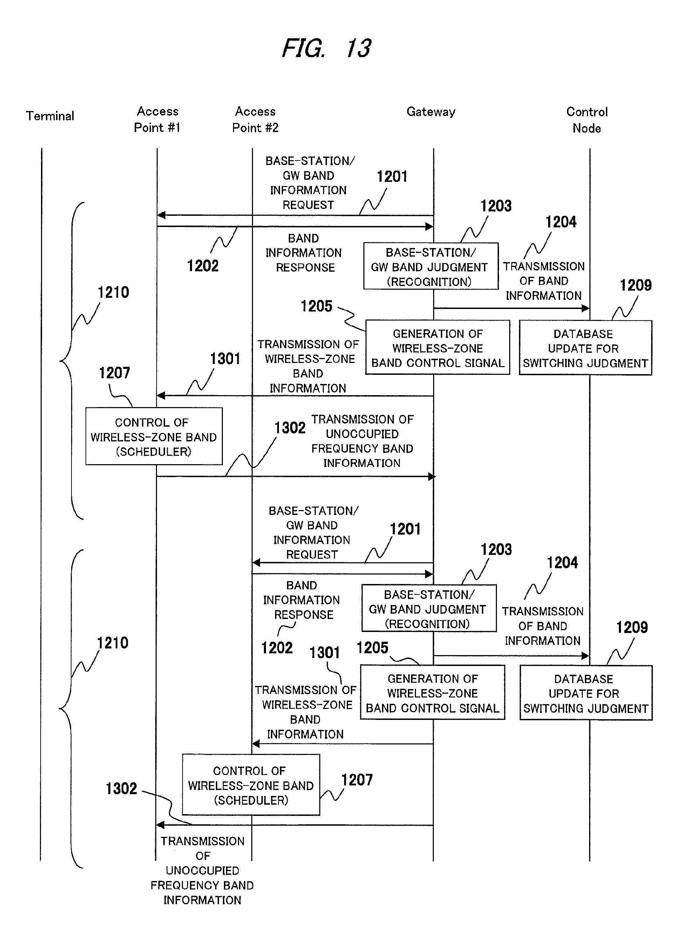

Note that, in the second embodiment, the gateway is as a master (upper-level) station for controlling the plurality of base stations, and therefore, the base station may directly notify the adjacent base station of the information of the unoccupied frequency band as the (1208) of FIG. 12 or may notify the gateway of the information of the unoccupied frequency band as the (1302) of FIG. 13. In this case, the gateway can select the frequency band without causing the interference in consideration of the information of the unoccupied frequency band of the peripheral base station in addition to the information of the wired line, and transmit wireless-line band limiting information to the base station which is a control target, so that the control of the wireless line at the base station is facilitated.

A third embodiment according to the present invention is explained.

In the third embodiment, a case that the base station is a femtocell base station is considered. For a femtocell, a relatively small cover area is assumed such that the femtocell is installed in a house or an office, and a base station is installed in the house or office. Therefore, there is a high possibility that the power of the wired line is turned off or that the band variation is caused due to the sharing of the ADSL line (303) with other users, and the femtocell is one of candidates to which the present invention is applied.

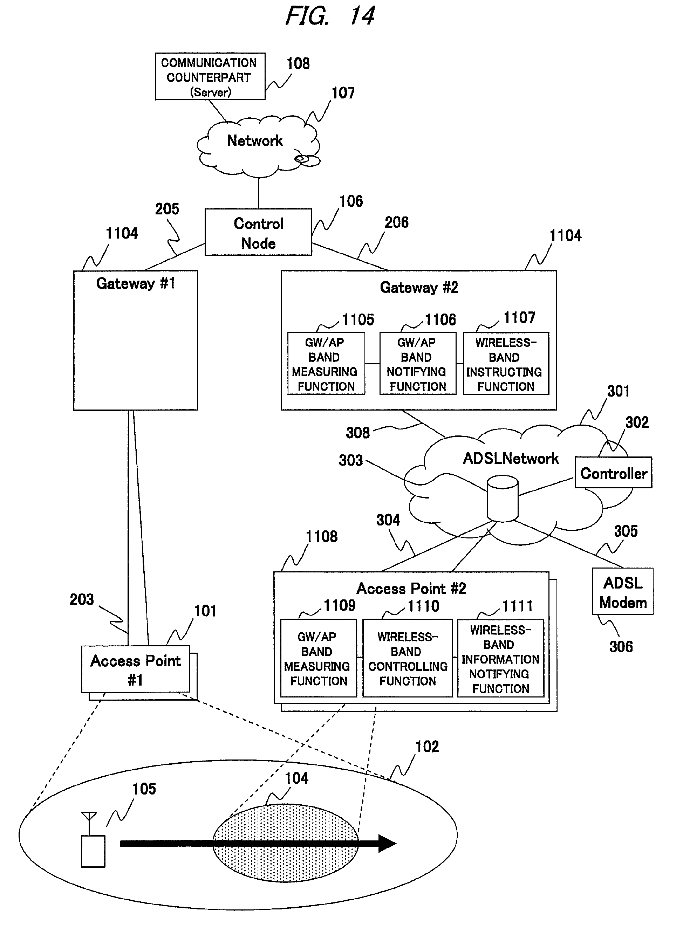

Also, in the femtocell, it is assumed that the femtocell is installed in the house or office and contains a wireless terminal within an area of the femtocell, and therefore, a distance between the femtocell base station and the wireless terminal is several meters to several tens of meters, which is a relatively short distance. As a result, it is required to install many femtocell base stations to cover a wide area where the user move, and therefore, the interference reduction to the adjacent base station is one of the achievement points. The interference reduction can be achieved by limiting the band used for the wireless zone and mutually sharing the information of the unused frequency band as shown from FIGS. 4 to 13. Note that, in the case of the femtocell base station described in the present embodiment, it is considered that a different line of the ADSL provider is used for the wired line between the femtocell base station and the gateway, and a system configuration of this case is shown in FIG. 14. As shown in FIG. 14, the point that the different line of the ADSL provider is used for the wired line between the femtocell base station and the gateway is different from the other embodiments. However, the gateway and the base station configuring the system can be operated by the functions described in the first embodiment and the second embodiment.

A fourth embodiment according to the present invention is explained.

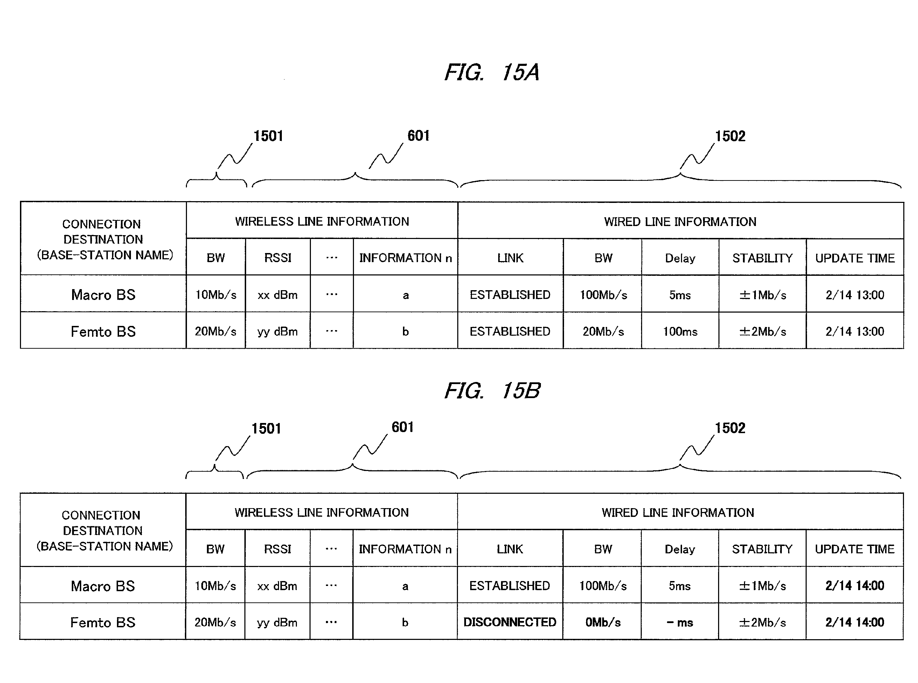

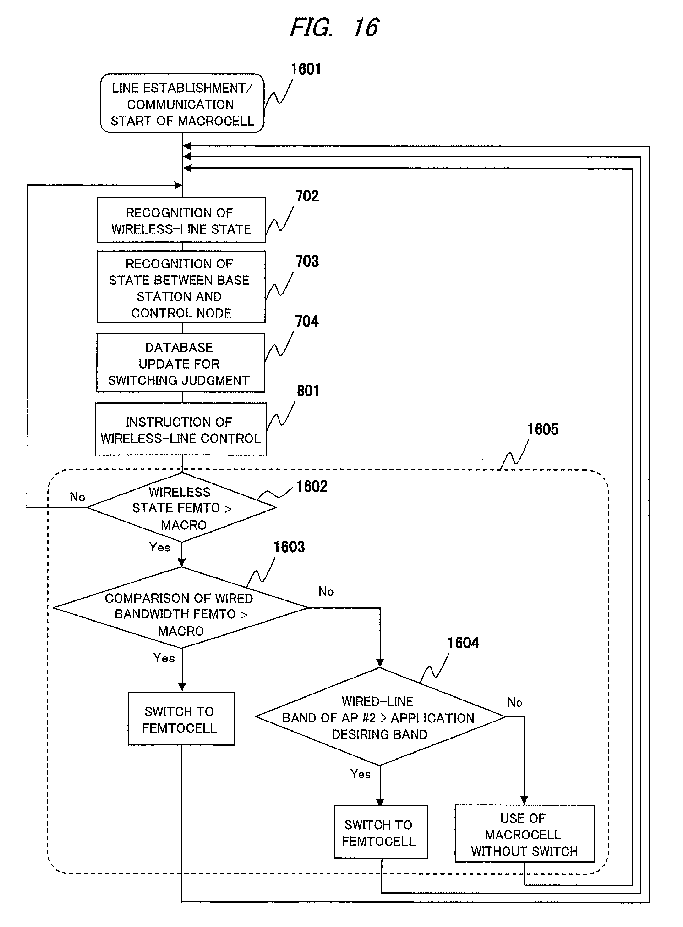

In the fourth embodiment, it is assumed that, when a terminal moves from an outside of a building to an inside thereof, the base station of the connection destination is switched from a macrocell supporting the outside of the building to a femtocell supporting the inside thereof. In a system configuration according to the present embodiment, the gateway #1 and the base station #1 101 on the left side of the configuration of FIG. 14 described in the third embodiment support the macrocell, and the gateway #2 and the base station #2 1108 on the right side thereof support the femtocell. In the macrocell, as used in an existing cellular communication system, the area between the base station and the gateway is installed and operated by the wireless communication provider and they are operated for 24 hours 365 days, and therefore, it is not required to measure the band of the wired line between the base station and the gateway. On the other hand, in the case of the femtocell base station, since the base station is installed in the house or office, there is a high possibility that the power of the wired line is turned off or the band variation occurs, and therefore, it is required to measure the state of the wired line as described in the first to third embodiments. Also, in the case of moving from the outside of the building to the inside thereof to switch from the macrocell to the femtocell, there are some cases that the femtocell is in an operating state or not operating state, or that, even in the operating state, it is better to continue the communication in the macrocell without switching to the femtocell when the speed of the wired line is low. Therefore, the control node which carries out the switching updates cyclically the database of the wired information between the femtocell base station and the gateway, and carries out the switching judgment also in consideration of these states. FIGs. 15A and 15B show an example of the database retained by the control node, and FIG. 16 shows a control flow of the control node in the switching between the base stations.

In each of FIGs. 15A and 15B, total bands (1501), RSSI (601), and others of the wireless line band of each base station are retained as the wireless line information. Also, as the wired line information, the information indicating whether the link of the control node with each base station is established or not (ex. "disconnected" if the power of the femtocell base station is off), the total band of the wired lines between the base stations and the control node, the delay time between each base station and the control node, the stability of the line, and the update time of the database are retained.

In FIG. 16, first, it is assumed that the wireless terminal establishes a line in the macrocell (base station #1 101) and is during the communication (1601). The control node recognizes (702) the state of the wireless line and the state of the wired line between each base station and the control node, and updates (704) the database (FIG. 15). At this time, the control node compares the BW of the wireless line information with the BW of the wired line information for each base station, and limits (801) the total band used as the wireless line to the same bandwidth as the bandwidth of the wired line. More specifically, each base station is notified of the total band of the wireless line to be limited.

Next, as shown in FIG. 14, when the wireless communication terminal enters the cell 104 of the femto base station (1108) because of the movement of the wireless communication terminal 105, the wireless states (601) of the macrocell and the femtocell are compared with each other. More specifically, their RSSI are compared with each other. If the RSSI of the femtocell base station is equal to or less than the RSSI of the macrocell, the switching of the base station is not carried out.

On the other hand, if the RSSI of the femtocell base station is larger than the RSSI of the macrocell, their wired line states such as their bands (BW of 1502) available for the wired line, their delay time, or their stability is compared (1603) with each other. Here, if the wired band which is available between the femto base station and the gateway is larger than the wired line band which is available between the macrocell and the gateway, the base station is switched to the femtocell.

On the other hand, if the wired band available between the femto base station and the gateway is equal to or smaller than the wired line band available between the macrocell and the gateway, the process proceeds to 1604. In the 1604, if the band of the wired line which is available between the femto base station and the gateway is larger than the band required for the application communication in which the wireless terminal 105 is currently during the communication in the macrocell, the base station is switched to the femto base station. On the other hand, if the band of the wired line available between the femto base station and the gateway is equal to or lower than the band required for the application communication in which the wireless terminal 105 is currently during the communication in the macrocell, the communication is continued in the macrocell without switching to the femtocell. If the bandwidths of the wired lines in the macrocell and the femtocell are equal to each other, the base station is switched to a base station connected to a wired line which is more stable, that is, whose bandwidth variation is small in consideration of its stability. Further, if no difference is observed in their values of the stability or if their values of the stability cannot be compared with each other, their information of their delay time are compared with each other. If the delay time of the femtocell is smaller than the delay time of the macrocell, the base station is switched to the femtocell.

If the switching is carried out from the communication in the macrocell to the femtocell base station, when the database is in the state of FIG. 15A, by carrying out the switching to the femtocell by the control node, the band of the wireless zone is to be widened, so that the higher-speed communication can be expected, and besides, also at the wired line, the communication at 20 Mb/s can be achieved, and therefore, the base station is switched to the femtocell. On the other hand, if the terminal similarly switches the base station from the macrocell to the femtocell at different time (B), it is assumed, although 20 Mb/s is expected for the band of the wireless line, to recognize that the link of the wired line of the femtocell base station is in the disconnected state due to the power off of the femtocell base station or the sharing of the ADSL line with other users. In this case, even if the base station is switched to the femtocell base station only by comparing their states of the wireless lines, the communication cannot be actually carried out since the wired line is in the disconnected state, and therefore, the communication in the macrocell is continued without switching to the femtocell.

A fifth embodiment according to the present invention is explained.

In the present embodiment, with assuming that the base station is installed in the house or office, a flow of a case that the power of the device is turned on is described. When the wireless communication provider has installed and operated the wired line or others, it has been assumed that the wired line is operated for 24 hours 365 days, and therefore, it is a situation which has not been assumed before.

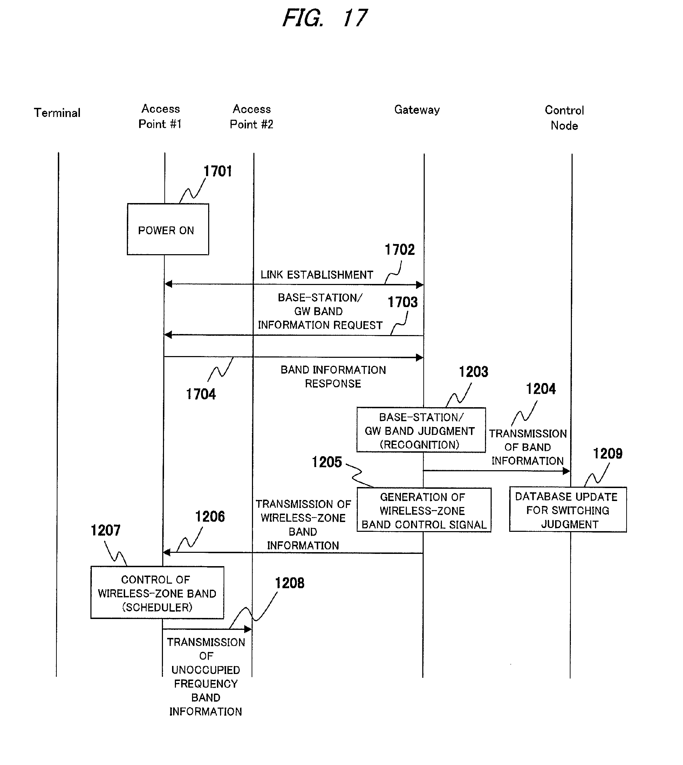

A control flow is shown in FIG. 17.

First, when the power of the base station is turned on (1701), a link is established (1702) between the base station and the gateway. Subsequently, a "base-station/gateway band information request" is transmitted (1703) from the gateway to the base station. The base station, which has received the request, responds (1704) information of the wired band. In this manner, the control node receives a notification of the wired band available between the base station and the gateway from the gateway, and can update the database (1502), and therefore, the communication using the corresponding base station and the switching to the base station can be achieved.

The control flow for limiting the band of the wireless line in accordance with the band of the wired line is in accordance with the flow described in the first or second embodiment.

A sixth embodiment according to the present invention is explained.

In the present embodiment, with assuming that the base station is installed in the house or office, a flow of the case when the power of the device is turned on is described. When the wireless communication provider has been installed and operated the wired line or others, it has been assumed that the wired line is operated for 24 hours 365 days, and therefore, it is a situation which has not been assumed before.

A flow after the link establishment is different from that of the fifth embodiment.

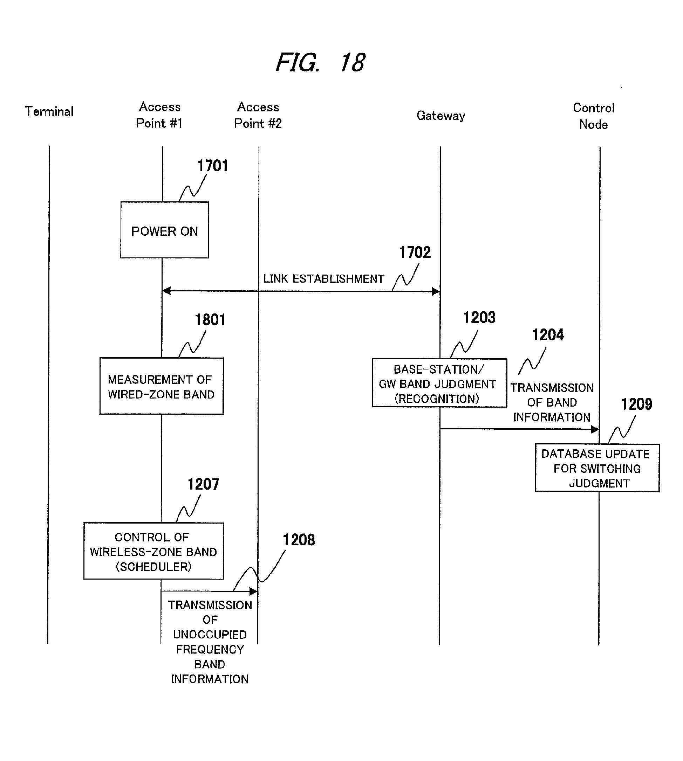

In the present embodiment, as shown in FIG. 18, after the link establishment (1702) between the base station and the gateway, there is provided a state that the base station and the gateway are connected with each other. Therefore, the base station and the gateway independently measure (1801 and 1203) the bands of the wired zones of the base station and the gateway, respectively, to control (1207) the limitation of the band of the wireless zone such that "the band of the wired zone = the upper limit of the band used in the wireless zone". Also on the gateway side, the band of the wired line is recognized (1203) only by the gateway since it is connected to the base station, and this information is transmitted (1204) to the control node which controls this switching. In this manner, by independently recognizing the band of the wired line by each device, the communication between the base station and the gateway is not required, and therefore, high-speed band control of the wireless line can be achieved.

A seventh embodiment according to the present invention is explained.

In the present embodiment, with assuming that the base station is installed in the house or office, a flow of the case that the power of the device is turned off is described. When the wireless communication provider has installed and operated the wired line or others, it has been assumed that the wired line is operated for 24 hours 365 days, and therefore, it is a situation which has not been assumed before. When the power of the base station is turned off, even if this base station is selected as the connection destination, the band of the wired line is not ensured, and therefore, there is a problem that the communication cannot be carried out, and it is required to avoid this situation.

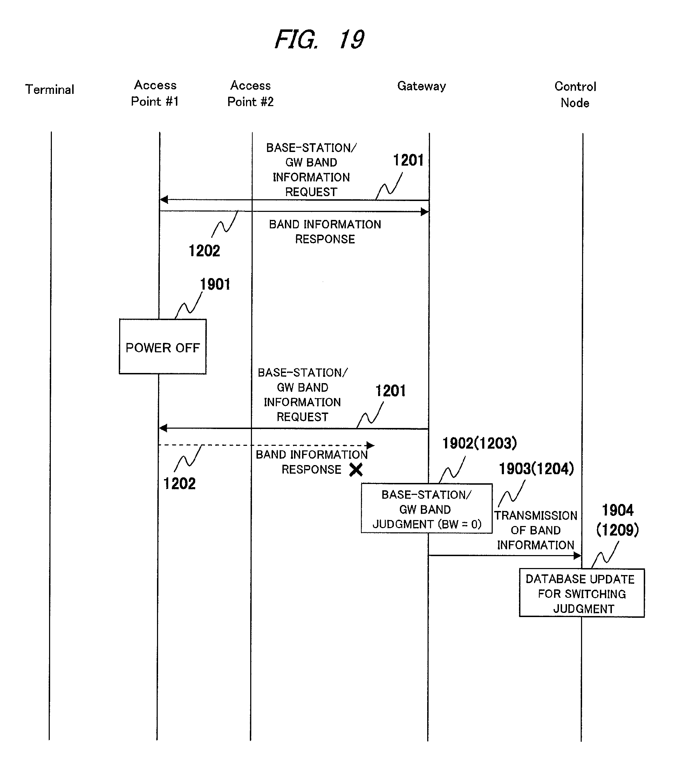

As shown in FIG. 19, on the base station side, the power is suddenly turned off (1901) by a user in the house or office. The gateway side is in a state that it cyclically requests (1201) the wired-line band information and a response thereto is not returned (1202). When the response is not returned for a certain period of time, it is judged that the power of the base station side is turned off, and the control node side is notified (1903) of the information as "the band between the corresponding base station and the gateway = 0" (1902). As the method of judging that "the band between the base station and the gateway = 0", in addition to the judgment method by not returning the response of the message as described above, a judgment method by activation of a message, alert, or others indicating the link disconnection with the base station may be replaced on the gateway side. The control node side updates (1904) the database, and controls so that the corresponding base station is not used as the switching destination. More specifically, when the wired line is disconnected as shown in (1502) of FIG. 15B, the switching to this base station is not selected regardless of the state of the wireless line. In this manner, unnecessary switching to the base station whose communication with the wireless terminal is disconnected can be avoided, and therefore, the communication can be continued.

An eighth embodiment according to the present invention is explained.

In the present embodiment, with assuming that the base station is installed in the house or office, a flow of a case that the power of the device is turned off is described. When the wireless communication provider has installed and operated the wired line or others, it has been assumed that the wired line is operated for 24 hours 365 days, and therefore, it is a situation which has not been assumed before.

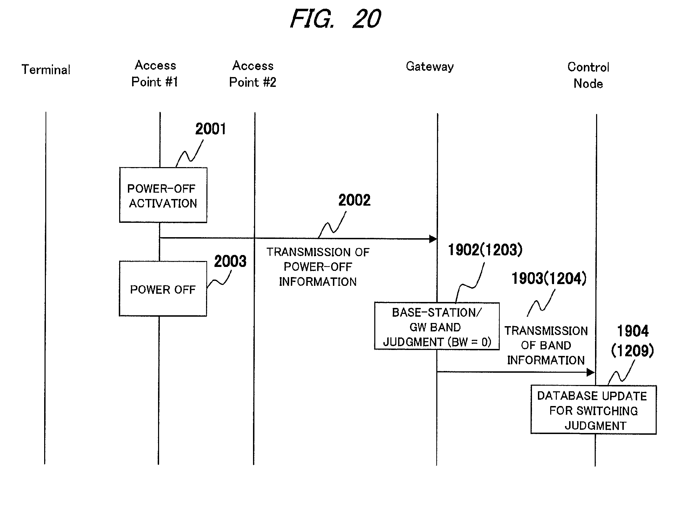

In FIG. 19, the case (1901) that the power is suddenly turned off by the user in the house or office on the base station side has been assumed. However, FIG. 20 is different from the seventh embodiment in a point of having a power off sequence in a circuit of the base station. In the sequence, when a button or others for turning the power off is pressed, the power is not immediately turned off, a message indicating that the power is to be turned off is transmitted (2002) to the gateway side, and then, the power of the device is turned off (2003).

In this embodiment, the gateway side can recognize the state at the timing of the power off, and therefore, the recognition of the state of the base station and the database update can be achieved earlier than those of the seventh embodiment, and the unnecessary switching to the base station whose communication with the wireless terminal is disconnected can be avoided, so that the communication can be continued.

Also, the invention of the present application has a feature in the following point.

In a wireless communication system which includes: a wireless communication base station device; a gateway; and a wireless communication terminal contained in the wireless communication base station device, the gateway controls a wireless band between the wireless communication base station device and the wireless communication terminal based on a band which is available for a wired line between the wireless communication base station device and the gateway and a wireless band which is available between the wireless communication base station device and the wireless communication terminal, and the wireless communication base station device notifies another wireless communication base station device of a wireless frequency band used for the communication between the wireless communication base station device and the corresponding wireless communication terminal in the corresponding wireless communication base station device.

In a wireless communication base station device which is connected to a gateway and which contains a wireless communication terminal, a used band between the wireless communication base station device and the wireless communication terminal is controlled based on a band which is available for a wired line between the wireless communication base station device and the gateway and a wireless band which is available between the wireless communication base station device and the wireless communication terminal, the gateway is connected to a plurality of another wireless communication base station devices or another node via a wired line, and the wired line between the wireless communication base station device and the control node is variable depending on a usage state of a wired band between the gateway and the plurality of another wireless communication base station devices or the another node.

In the wireless communication base station device described above, the plurality of wireless communication base station devices are connected via the gateway, the wireless communication base station device notifies the another wireless communication base station device of a wireless frequency band not used for the communication between the corresponding wireless communication base station device and the wireless communication terminal in the corresponding wireless communication base station device.

In the wireless communication base station device described above, the wireless communication base station device notifies the another wireless communication base station device of a wireless frequency band used for the communication between the corresponding wireless communication base station device and the wireless communication terminal in the corresponding wireless communication base station device.

In the wireless communication base station device described above, the wireless communication base station device does not transmit radiowaves having a frequency band except for the selected wireless frequency band.

In the wireless communication base station device described above, when the another wireless communication base station device is notified of wireless frequency band information used for the communication between the wireless communication base station device and the wireless communication terminal of which the wireless communication base station device notifies, a used wireless frequency band is determined so as to avoid the corresponding notified wireless frequency band.

Also, in a wireless communication system which includes: a wireless communication base station device; a control node; and a wireless communication terminal contained in the wireless communication base station device, a used band between the wireless communication base station device and the wireless communication terminal is determined based on a band which is available for a wired line between the wireless communication base station device and the control node and a wireless band which is available between the wireless communication base station device and the wireless communication terminal.

In the wireless communication system described above, the control node is connected to a plurality of another wireless communication base station devices or another node via a wired line, the wired line between the wireless communication base station device and the control node is variable depending on a usage state of the wired band between the control node and the plurality of another wireless communication base station devices or the another node.

In the wireless communication system described above, the wireless communication system includes the plurality of wireless communication base station devices, and the control node switches the wireless communication base station device to which the wireless communication terminal is connected, based on a band which is available for the wired line between the wireless communication base station device and the control node and a wireless band which is available between the wireless communication base station device and the wireless communication terminal.

In a control node connected to a plurality of wireless communication base station devices which contains a wireless communication terminal, the control node switches the wireless communication base station device to which the wireless communication terminal is connected, based on a band which is available for a wired line between the wireless communication base station device and the control node and a wireless band which is available between the wireless communication base station device and the wireless communication terminal, and, when a wired band satisfying a band required for data communication during communication by the wireless communication terminal is available between another wireless communication base station device and the control node, the communication of the wireless communication terminal with the wireless communication base station device is switched into the communication with the another wireless communication base station device.

Also, in a gateway connected to a wireless communication base station device which contains a wireless communication terminal, band information of a wired line with the wireless communication base station device is measured, and the wireless communication base station device is notified of the information.

In the gateway described above, it is further connected to a control node for switching a plurality of wireless communication systems, and the control node is notified of the measured band information of the wired line with the wireless communication base station device.

### INDUSTRIAL APPLICABILITY

The present invention can be particularly used for a technique for high-speed switching between a plurality of wireless communication systems including a wireless communication system in which in-home ADSL, FTTH, or others is used for a wired line on a network side, and a technique for system switching between a macrocell and a femtocell.

### Symbol Explanation

101 ... access point #1
102 ... service area of access point #1
103 ... access point #2
104 ... service area of access point #2
105 ... terminal
106 ... control node
107 ... network
108 ... communication counterpart or server
109 ... access-point/control-node wired line
110 ... access-point/control-node wired line
201 ... gateway #1
202 ... gateway #2
203 ... access-point/gateway wired line
204 ... access-point/gateway wired line
205 ... gateway/control-node wired line
206 ... gateway/control-node wired line
301 ... ADSL network
302 ... ADSL sharing line controlling unit
303 ... ADSL sharing line
304 ... ADSL independent line
305 ... ADSL independent line
306 ... ADSL modem
307 ... ADSL modem
308 ... cable
401 ... control node
402 ... switch controlling unit
403 ... wired-band information database
404 ... control-node/base-station band measuring function
405 ... wireless-line band instructing function
406 ... access point
407 ... control-node/base-station band measuring function
408 ... wireless-band controlling function
409 ... wireless-band information notifying function
501 ... base-station/control-node band information request
502 ... band information response
503 ... base-station/control-node band judgment
504 ... database update
505 ... generation of wireless-zone band control signal
506 ... transmission of wireless-zone band information
507 ... wireless-zone band control
508 ... transmission of unoccupied frequency band information
509 ... communication occurrence
510 ... switching judgment
601 ... wireless-line information database
602 ... wired-line information database
603 ... wireless-line maximum allocatable bandwidth information database
701 ... line establishment and communication start via access point #1
702 ... recognition of wireless-line state
703 ... recognition of base-station/control-node wired-line state
704 ... database update
705 ... comparison of wireless-line state
706 ... additional control flow according to the present invention
707 ... comparison of wired-line bandwidth
708 ... comparison of wired-line bandwidth and application-desiring bandwidth
801 ... band control flow at control node
802 ... comparison of wireless-line bandwidth and wired-line bandwidth
803 ... setting of wireless-line bandwidth
804 ... generation of wireless-zone band control signal
805 ... transmission of wireless-zone band information
901 ... maximum wireless bandwidth allocatable to base station
902 ... radiowave state at wireless frequency
903 ... allocated wireless frequency
904 ... unoccupied wireless frequency
905 ... wireless frequency allocated to peripheral base station
1001 ... cyclic control at access point #1
1002 ... cyclic control at access point #2
1101 ... controlling unit
1102 ... switch controlling unit
1103 ... wired-band information database
1104 ... gateway
1105 ... gateway/base-station band measuring function
1106 ... gateway/base-station band notifying function
1107 ... wireless-band instructing function
1108 ... base station
1109 ... gateway/base-station band measuring function
1110 ... wireless-band controlling function
1111 ... wireless-band information notifying function
1201 ... base-station/gateway band information request
1202 ... band information response
1203 ... base-station/gateway band judgment
1204 ... transmission of base-station/gateway band information
1205 ... generation of wireless-zone band control signal
1206 ... transmission of wireless-zone band information
1207 ... wireless-zone band control
1208 ... transmission of unoccupied frequency band information
1209 ... database update
1210 ... cyclic control
1301 ... transmission of unoccupied frequency band information from base station to gateway
1302 ... transmission of unoccupied frequency band information from gateway to base station
1501 ... wireless-line information database of macrocell and femtocell
1502 ... wired-line information database of macrocell and femtocell
1601 ... line establishment and communication start at macrocell
1602 ... comparison of wireless-line state of macrocell and femtocell
1603 ... comparison of wired-line state of macrocell and femtocell
1604 ... comparison of wired-line bandwidth and application-desiring bandwidth
1605 ... additional control flow in femtocell switching
1701 ... power on
1702 ... link establishment
1703 ... base-station/gateway band information request
1704 ... band information response
1801 ... wired-line band measurement
1901 ... power off
1902 ... base-station/gateway band judgment (band = 0)
1903 ... band information transmission (band = 0)
1904 ... database update
2001 ... activation of power off
2002 ... transmission of power-off information
2003 ... power off

## Claims

1. A wireless communication system which includes: a wireless communication base station device; a gateway; and a wireless communication terminal contained in the wireless communication base station device,
the gateway controlling a wireless band between the wireless communication base station device and the wireless communication terminal, based on a band which is available for a wired line between the wireless communication base station device and the gateway and a wireless band which is available between the wireless communication base station device and the wireless communication terminal.

2. The wireless communication system according to claim 1, wherein
the gateway is connected to a plurality of another wireless communication base station devices or another node via a wired line, and
the wired line between the wireless communication base station device and the control node is variable depending on a usage state of a wired band between the gateway and the plurality of another wireless communication base station devices or the another node.

3. The wireless communication system according to claim 1, wherein
the wireless communication base station device controls an upper limit value of a frequency band of a wireless zone between the wireless communication base station device and the wireless communication terminal so as to be a band of a wired line which is available between the corresponding wireless communication base station device and the corresponding gateway.

4. The wireless communication system according to claim 1, wherein
the wireless communication system includes: a plurality of wireless communication base station devices; a plurality of gateways connected to the plurality of wireless communication base station devices; and a control node connected to the plurality of gateways, and
the control node switches the wireless communication base station device to which the wireless communication terminal is connected, based on a band which is available for a wired line between the wireless communication base station device and the control node and a wireless band which is available between the wireless communication base station device and the wireless communication terminal.

5. The wireless communication system according to claim 4, wherein
the control node retains information of the band which is available for the wired line between the wireless communication base station device and the control node and information of the wireless band which is available between the wireless communication base station device and the wireless communication terminal.

6. The wireless communication system according to claim 4, wherein,
when a communication state of a wireless line with another wireless communication base station device is better than that with a wireless communication base station device which is during communication with the wireless communication terminal and when a band of a wired line required for the communication by the corresponding wireless terminal is available between the another wireless communication base station device and the control node, the control node switches the communication of the wireless communication terminal with the wireless communication base station device into the communication with the another wireless communication base station device.

7. The wireless communication system according to claim 6, wherein,
when a wired band satisfying a band required for data communication during communication with the wireless communication terminal is available between the another wireless communication base station device and the control node, the control node switches the communication of the wireless communication terminal with the wireless communication base station device into the communication with the another wireless communication base station device.

8. The wireless communication system according to claim 1, wherein
the wireless communication system includes: a plurality of wireless communication base station devices; a plurality of gateways connected to the plurality of wireless communication base station devices; and a control node connected to the plurality of gateways,
each of the plurality of wireless communication base station devices is a wireless communication base station device corresponding to a different wireless communication system from each other, and
the control node judges whether the wireless communication system used for the communication with the wireless communication terminal is switched or not, based on information of a wired band which is available between the wireless communication base station device and the control node and information of a wireless band which is available between the wireless communication base station device and the control node.

9. The wireless communication system according to claim 1, wherein
the wireless communication base station device selects a used wireless frequency band so that an upper limit value of a band of a wireless line used for the communication of the wireless communication base station device with the wireless communication terminal is a band of a wired line which is available between the corresponding wireless communication base station device and the control node.

10. The wireless communication system according to claim 1, wherein
the wireless communication system includes a plurality of the wireless communication base station devices, and
the wireless communication base station device notifies another wireless communication base station device of a wireless frequency band not used for the communication of the corresponding wireless communication base station device with the wireless communication terminal in the corresponding wireless communication base station device.

11. The wireless communication system according to claim 1, wherein
the wireless communication base station device notifies another wireless communication base station device of a wireless frequency band used for the communication of the corresponding wireless communication base station device with the wireless communication terminal in the corresponding wireless communication base station device.

12. The wireless communication system according to claim 9, wherein
the wireless communication base station device does not transmit radiowaves having a frequency band except for the selected wireless frequency band.

13. The wireless communication system according to claim 10, wherein,
when the another wireless communication base station device is notified of wireless frequency band information used for the communication of the wireless communication base station device with the wireless communication terminal of which the wireless communication base station device notifies, a used wireless frequency band is determined so as to avoid the corresponding notified wireless frequency band.

14. A wireless communication base station device which is connected to a gateway and contains a wireless communication terminal,
a band used between the wireless communication base station device and the wireless communication terminal being controlled based on a band which is available for a wired line between the wireless communication base station device and the gateway and a wireless band which is available between the wireless communication base station device and the wireless communication terminal.

15. The wireless communication base station device according to claim 14, wherein
an upper limit value of a frequency band of the wireless zone between the wireless communication base station device and the wireless communication terminal is controlled so as to be a band of a wired line which is available between the corresponding wireless communication base station device and the corresponding gateway.

16. The wireless communication base station device according to claim 14, wherein,
the wireless communication base station device selects
a used wireless frequency band so that an upper limit value of a wireless-line band used for the communication of the wireless communication base station device with the wireless communication terminal is a wired-line band which is available between the corresponding wireless communication base station device and the corresponding gateway.

17. The wireless communication base station device according to claim 14, wherein
a plurality of wireless communication base station devices are connected via the gateway,
the wireless communication base station device notifies another wireless communication base station device of a wireless frequency band not used for the communication between the corresponding wireless communication base station device and the wireless communication terminal in the corresponding wireless communication base station device, and,
when the another wireless communication base station device is notified of wireless frequency band information used for the communication between the wireless communication base station device and the wireless communication terminal of which the wireless communication base station device notifies, a used wireless frequency band is determined so as to avoid the corresponding notified wireless frequency band.

18. A control node connected a plurality of wireless communication base station devices which contains a wireless communication terminal,
the control node switching the wireless communication base station device to which the wireless communication terminal is connected, based on a band which is available for a wired line between the wireless communication base station device and the control node and a wireless band which is available between the wireless communication base station device and the wireless communication terminal.

19. The control node according to claim 18, wherein
the control node retains information of the band which is available for the wired line between the wireless communication base station device and the control node and information of the wireless band which is available between the wireless communication base station device and the wireless communication terminal.

20. The control node according to claim 18, wherein
the control node is connected to a plurality of wireless communication base station devices via a plurality of gateways,
each of the plurality of wireless communication base station devices is a wireless communication base station device corresponding to a different wireless communication system from each other, and
the control node judges whether the wireless communication system used for the communication with the wireless communication terminal is switched or not, based on information of a wired band which is available between the wireless communication base station device and the control node and information of a wireless band which is available between the wireless communication base station device and the control node.
